# EUROPÄISCHE PATENTSCHRIFT

(11) **EP 4 294 317 B1**
(45) Veröffentlichungstag und Bekanntmachung des Hinweises auf die Patenterteilung: **02.04.2025**
(21) Anmeldenummer: 22701322.4
(22) Anmeldetag: 12.01.2022
(51) Int. Cl.: A61C 5/42

(54) **VERFAHREN ZUR HERSTELLUNG EINES ARBEITSBEREICHS FÜR EIN WURZELKANALINSTRUMENT SOWIE EINES WURZELKANALINSTRUMENTS UND WURZELKANALINSTRUMENT**
METHOD FOR PRODUCING A WORKING AREA FOR A ROOT CANAL INSTRUMENT AND FOR PRODUCING A ROOT CANAL INSTRUMENT, AND ROOT CANAL INSTRUMENT
PROCÉDÉ DE PRODUCTION D'UNE ZONE DE TRAVAIL DESTINÉE À UN INSTRUMENT POUR CANAUX RADICULAIRES ET DE PRODUCTION D'UN INSTRUMENT POUR CANAUX RADICULAIRES, ET INSTRUMENT POUR CANAUX RADICULAIRES

(30) Priorität: 22.02.2021 DE 102021104165
(43) Veröffentlichungstag der Anmeldung: 27.12.2023
(73) Patentinhaber: Gebr. Brasseler GmbH & Co. KG, 32657 Lemgo (DE)
(72) Erfinder: KRUMSIEK, Michael, 32657 Lemgo (DE)
(74) Vertreter: Hoefer & Partner Patentanwälte mbB
(86) Internationale Anmeldenummer: PCT/EP2022/050526
(87) Internationale Veröffentlichungsnummer: WO 2022/174992

(56) Entgegenhaltungen:
- US-A1- 2007 101 827
- US-A1- 2012 282 571
- US-A1- 2014 242 543

## Beschreibung

Die vorliegende Erfindung betrifft ein Verfahren zur Herstellung eines Arbeitsbereichs für ein Wurzelkanalinstrument und auch ein Verfahren zur Herstellung eines Wurzelkanalinstruments. Ferner betrifft die vorliegende Erfindung auch ein gemäß den Verfahren hergestelltes Wurzelkanalinstrument.

Wurzelkanalinstrumente sind aus dem Stand der Technik, beispielsweise aus der

US 2012/282571 A1 und der

DE 202012012526 U1, bekannt. Wurzelkanalinstrumente müssen eine gewisse Flexibilität aufweisen, um den Bögen und Windungen eines Wurzelkanals folgen zu können, so dass eine entsprechende Wurzelkanalbehandlung ausgeführt werden kann. Hierzu weisen Wurzelkanalinstrumente einen Arbeitsbereich und einen Schaftbereich auf, wobei der Schaftbereich (oder kurz: Schaft) als Griffbereich fungiert. Der Arbeitsbereich weist eine Seele, d.h. einen Vollmaterial-Kern, auf, welcher sich kontinuierlich in Richtung zum Schaftbereich konisch erweitert. Insbesondere Backenzähne weisen ein relativ kompliziertes Wurzelkanalsystem auf, bei dem das Wurzelkanalinstrument auch kleinen Radien des Wurzelkanals folgen muss. Hierzu muss der Arbeitsbereich des Wurzelkanalinstruments besonders flexibel sein. Dies wird bislang durch eine weitere Verjüngung der Seele des Wurzelkanalinstruments erzielt, was jedoch zu einer geringeren mechanischen Stabilität des Arbeitsbereichs führt und somit ein gewisses Risiko des Abbrechens eines Teils des Arbeitsbereichs während der Wurzelkanalbehandlung birgt.

Es ist daher Aufgabe der vorliegenden Erfindung, ein Verfahren zur Herstellung eines Arbeitsbereichs für ein Wurzelkanalinstrument, ein Verfahren zur Herstellung eines Wurzelkanalinstruments und auch ein dentales Wurzelkanalinstrument bereitzustellen, wobei sich das Wurzelkanalinstrument bei einfachem und dennoch stabilem Aufbau durch eine verbesserte Flexibilität auszeichnet und insbesondere auch starken Windungen eines Wurzelkanals eines Zahns folgen kann. Die Verfahren sollen zudem einfach und kostengünstig umsetzbar sein.

Diese Aufgabe wird durch ein Verfahren zur Herstellung eines Arbeitsbereichs für ein Wurzelkanalinstrument, durch ein Verfahren zur Herstellung eines Wurzelkanalinstruments sowie durch ein Wurzelkanalinstrument mit den Merkmalen der unabhängigen Ansprüche gelöst. Die Unteransprüche zeigen bevorzugte Weiterbildungen der Erfindung.

Das erfindungsgemäße Verfahren zur Herstellung eines Arbeitsbereichs für ein Wurzelkanalinstrument umfasst hierzu zunächst einen Schritt des Bereitstellens eines Stranges aus einer Nickel-Titan-Legierung. Unter einer Nickel-Titan-Legierung im Sinne der vorliegenden Erfindung wird eine Legierung verstanden, die als Metallkomponenten ausschließlich Nickel und Titan und darüber hinaus im Wesentlichen keine weiteren metallischen Komponenten enthält. "Im Wesentlichen" bedeutet dabei bis auf technisch unvermeidbare Verunreinigungen, die jedoch Mengenanteile von weniger als 0,1 Masse% und insbesondere von weniger als 0,05 Masse%, bezogen auf die Gesamtmasse der Nickel-Titan-Legierung umfassen. Die Nickel-Titan-Legierung kann jedoch nichtmetallische Elemente, Verbindungen und/oder Komponenten enthalten.

Sodann wird der Strang der Nickel-Titan-Legierung auf ein Rohlingmaß des Arbeitsbereichs abgelängt und im Anschluss daran an einem Ende des Stranges eine Spitze im herzustellenden Arbeitsbereich geformt. Das Formen der Spitze ist wesentlich für die spätere Endgeometrie des Arbeitsbereichs für das Wurzelkanalinstrument, da diese präzise und schlank geformt werden muss, um sich zum Einführen in einen Wurzelkanal zu eignen. Das Formen der Spitze kann z.B. durch Schleifen erfolgen, so dass ein im Wesentlichen zylindrisch geformtes Bauteil mit Spitze an einem Ende entsteht.

Erst im Anschluss daran erfolgt ein Wärmebehandeln des Arbeitsbereichs bei einer Temperatur von 400 bis 430 °C für 25 bis 40 Minuten. Als besonders vorteilhaft hast sich eine Temperatur von 400 °C und eine Dauer der Wärmebehandlung von 30 Minuten herausgestellt. Das Formen der Spitze wird jedoch noch in einem Zustand der Nickel-Titan-Legierung ausgeführt, in dem die Legierung superelastisch und hart ist, so dass die Spitze auch sehr dünn ausgeführt werden und gleichzeitig ein Abbrechen der entstehenden Spitze verhindert werden kann.

Durch die sich anschließende Wärmebehandlung bei einer Temperatur von 400 bis 430 °C für 25 bis 40 Minuten und ein darauffolgendes Quenchen des wärmebehandelten Arbeitsbereichs auf Raumtemperatur wird das superelastische Material getempert und erhält eine dauerhaft hohe Flexibilität bei gleichzeitig hoher mechanischer Stabilität. Wenngleich ein Tempern von nickelhaltigen Titanlegierungen bei Temperaturen von um die 300 °C bekannt ist, so wurde erfindungsgemäß gefunden, dass sich erst bei einer Wärmebehandlung ab 400 °C, und zwar von 400 bis 430 °C und vorzugsweise bei 400 °C, für 25 bis 40 Minuten und insbesondere für 30 Minuten, ein optimal auf die Herstellung eines Arbeitsbereichs für ein Wurzelkanalinstrument ausgerichtetes Material bildet, das sehr gut handhabbar ist und selbst in stark verwinkelte Wurzelkanäle eingeführt werden kann, ohne abzubrechen. Temperaturen von weniger als 400 °C haben sich als nicht ausreichend herausgestellt, um die guten anwendungstechnischen Eigenschaften mit den sehr guten mechanischen Eigenschaften zu vereinen. Die Wärmebehandlung kann dabei insbesondere in einem geeigneten Wärmeofen erfolgen, dessen Innentemperatur auf 400 °C gehalten wird. Alternativ zu einer Wärmebehandlung in einem Ofen kann die erforderliche Wärme auch über ein "Resistivverfahren" eingebracht werden. Hierbei erfolgt ein Anlegen einer Spannung an das zu erwärmende Bauteil, wobei sich der Stromfluss auf ca. 5A pro Bauteil regelt. Die Kontaktierung des Bauteils mit der Spannungsquelle kann über einen mechanischen Schleifkontakt oder alternativ über einen leitfähigen Elektrolyt erfolgen.

Das Quenchen auf Raumtemperatur erfolgt dabei insbesondere zur Verbesserung der Flexibilität des Arbeitsbereichs, also zur Erhöhung dessen Biegefähigkeit und auch um die mechanische Stabilität im Hinblick auf eine Dehnfähigkeit zu verbessern, wodurch insbesondere einem Abbrechen des Arbeitsbereichs bei hohen Torsionskräften entgegengewirkt wird. Unter Quenchen wird im Sinne der vorliegenden Erfindung dabei ein Abschrecken von der Tempertemperatur bzw. der Temperatur des Wärmebehandelns auf Raumtemperatur, also auf etwa 20 bis 25 °C, verstanden. Dies gelingt insbesondere durch in Kontakt bringen der getemperten bzw. wärmebehandelten Nickel-Titan-Legierung mit einem bei Raumtemperatur gehaltenen Medium. Das Medium ist im Einzelnen nicht beschränkt und kann Gase, wie Stickstoff oder Kohlenstoffdioxid, oder auch Flüssigkeiten, wie Wasser und andere inerte Lösungsmittel umfassen.

Nach dem Tempern wird die Endgeometrie des Arbeitsbereichs hergestellt, also insbesondere aus der zylindrischen Form des ursprünglich verwendeten Stranges eine konisch zur Spitze zulaufende Form gebildet und etwaige für die Wurzelkanalreinigung einsetzbare Abtragsflächen gebildet.

Das erfindungsgemäße Verfahren ist einfach und kostengünstig umsetzbar und ermöglicht die Herstellung eines für die Verwendung in einem Wurzelkanalinstrument bestens geeigneten Arbeitsbereichs, der sich durch eine hohe Flexibilität bei gleichzeitig hoher mechanischer Stabilität auszeichnet und somit bei Anwendung in einer Wurzelkanalbehandlung den Wurzelkanälen problemlos folgen kann ohne abzubrechen.

Vorteilhaft ist vorgesehen, dass das Wärmebehandeln durch Anwendung eines Resistivverfahrens erfolgt.

Gemäß einer vorteilhaften Weiterbildung umfasst die Nickel-Titan-Legierung als weitere Komponenten Kohlenstoff und/oder Sauerstoff. Diese Komponenten können in elementarer Form, also z.B. als reiner Kohlenstoff, vorliegen oder aber in Form von Verbindungen, wie z.B. Carbiden oder Oxiden. Ein Gehalt an Kohlenstoff und/oder Sauerstoff ist jedoch nicht wesentlich und die Nickel-Titan-Legierung kann auch nur aus Nickel und Titan bestehen. Maximalgehalte an Kohlenstoff auf der einen Seite und Sauerstoff auf der anderen Seite liegen bei jeweils 0,05 Masse%, bezogen auf die Gesamtmasse der Nickel-Titan-Legierung.

Besonders bevorzugt besteht die für das Verfahren verwendete Nickel-Titan-Legierung aus 54 bis 57 Masse% Nickel, maximal 0,05 Masse% Kohlenstoff, maximal 0,05 Masse% Sauerstoff und Titan als Rest. Die Gehalte an Wasserstoff, Sauerstoff und Stickstoff werden dabei über Trägerheißgasextraktion (TGHE) bestimmt. Der Gehalt an Kohlenstoff wird über eine Verbrennungsanalyse ermittelt und der Gehalt aller anderen Elemente wird mittels Röntgenfluoreszenzanalyse (RFA) gemessen.

Als besonders bevorzugtes Material im Hinblick auf sein Formgedächtnis, wird Nitinol eingesetzt.

Ferner vorteilhaft umfasst das Verfahren einen Schritt des Verrundens des Arbeitsbereichs nach dem Formen der Spitze und vor dem Wärmebehandeln. Durch das Verrunden, das insbesondere mittels Taumeln ausgeführt werden kann, können scharfe Kanten abgerundet werden, die nach dem Tempern schlechter bzw. nur mit hohem Materialverlust nachbearbeitet werden können.

Besonders vorteilhaft wird das Quenchen in Wasser ausgeführt. Es hat sich herausgestellt, dass Wasser, aufgrund seiner hohen Wärmekapazität, für eine besonders schnelle Abkühlung der Nickel-Titan-Legierung sorgt, wodurch sowohl die Biegefähigkeit als auch die Dehnfähigkeit des Arbeitsbereichs weiter verbessert werden.

Das Herstellen der Endgeometrie des Arbeitsbereichs wird insbesondere durch Schleifen ausgeführt. Hierbei kann das Schleifen gemäß einer vorteilhaften Weiterbildung ein Schleifen einer Verzahnung und/oder einer Tiefenmarkierung umfasst. Verzahnungen können dazu beitragen, infiziertes Pulpagewebe besser zu eliminieren. Tiefenmarkierungen dienen dem Anwender als Hinweis, wie tief das Wurzelkanalinstrument in den Wurzelkanal eingeschoben wurde, um damit eine zu tief gehende Wurzelkanalbehandlung zu verhindern.

Insbesondere wird die Tiefenmarkierung in einen durch das Wärmebehandeln und Quenchen farblich verfärbten Bereich geschliffen, da sich hierdurch ein sehr guter farblicher Kontrast ergibt, und die Tiefenmarkierung besser visualisierbar ist.

Das Verfahren kann weitere Verfahrensschritte umfassen, wie z.B. ein Entgraten des Arbeitsbereichs. Das Entgraten kann z.B. durch Laserstrahlen oder Wasserstrahlen ausgeführt werden.

Ferner erfindungsgemäß wird auch ein Verfahren zur Herstellung eines Wurzelkanalinstruments beschrieben, das die folgenden Schritte umfasst. In einem ersten Verfahrensschritt wird ein Arbeitsbereich für das Wurzelkanalinstrument unter Anwendung des vorstehenden erfindungsgemäßen Verfahrens zur Herstellung eines Arbeitsbereichs für ein Wurzelkanalinstrument hergestellt und im Anschluss daran der Arbeitsbereich mit einem Schaft verbunden. Der Schaft dient dem Anwender dabei als Griffbereich, um das Wurzelkanalinstrument zielsicher zu führen.

Vorzugsweise erfolgt das Verbinden des Arbeitsbereichs mit dem Schaft durch Verpressen, Schweißen oder Anspritzen. Insbesondere sind die beiden erstgenannten Verfahren dann besonders geeignet, wenn der Schaft aus einem metallischen Material gebildet ist. Ein direktes Anspritzen des Schafts an den Arbeitsbereich, also an das der Spitze des Arbeitsbereichs gegenüberliegende Ende des Wurzelkanalinstruments, wird insbesondere dann ausgeführt, wenn der Schaft aus einem spritzfähigen Kunststoffmaterial besteht. Beispielsweise kommt hierbei eine Spritzgusstechnik zur Anwendung.

Ferner vorteilhaft umfasst das Verfahren einen Schritt der Farbmarkierung und/oder einen Schritt der Montage eines Stoppers. Beide Varianten dienen dazu, dem Anwender des Wurzelkanalinstruments zu verdeutlichen, wie weit er das Wurzelkanalinstrument in einen Wurzelkanal eingeführt hat, um Schäden am Patienten zu verhindern. Die Farbmarkierung bzw. der Stopper werden dort am Wurzelkanalinstrument angebracht, wo ein tieferes Einführen in den Wurzelkanal verhindert werden soll.

Darüber hinaus erfindungsgemäß wird auch ein dentales Wurzelkanalinstrument beschrieben, das durch das vorstehende Verfahren zur Herstellung eines Wurzelkanalinstruments herstellbar ist. Das erfindungsgemäße Wurzelkanalinstrument zeichnet sich aufgrund der Anwendung des erfindungsgemäßen Verfahrens durch eine exzellente Flexibilität bei gleichzeitig hoher mechanischer Stabilität aus. Dadurch kann bei der Behandlung eines Wurzelkanals den Bögen und Windungen des Wurzelkanals mit dem erfindungsgemäßen Wurzelkanalinstrument, selbst bei schwer zugänglichen Backenzahnwurzelkanälen, hervorragend gefolgt werden, ohne dass ein Risiko eines Abbrechens des Arbeitsbereichs des Wurzelkanalinstruments besteht. Somit kann abgestorbenes oder infiziertes Pulpagewebe aus dem Wurzelkanal mit hoher Sicherheit vollständig entfernt werden. Dadurch gelingt eine weitestgehende Eliminierung von Mikroorganismen, welche sich im Wurzelkanal befinden.

Die für die erfindungsgemäßen Verfahren und das erfindungsgemäße Wurzelkanalinstrument beschriebenen Vorteile, vorteilhaften Effekte und Weiterbildungen finden jeweils wechselseitig Anwendung. Zudem wird im Hinblick auf etwaige Definitionen ergänzend Bezug genommen auf die vorstehenden Erläuterungen.

Im Folgenden wird die Erfindung anhand eines Ausführungsbeispiels in Verbindung mit der Zeichnung beschrieben. Dabei zeigt:

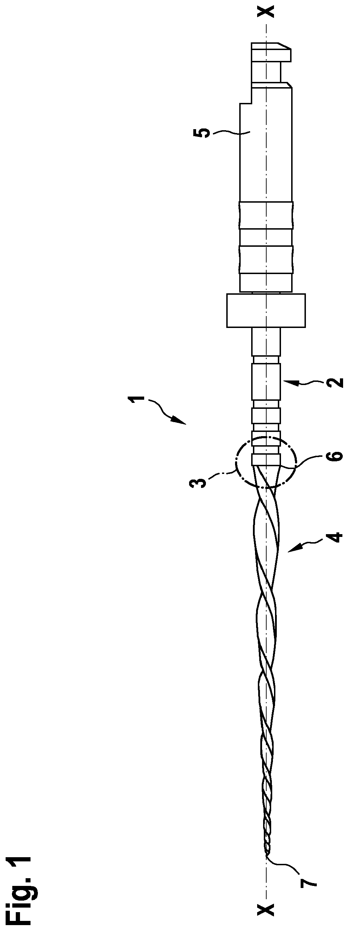

- Fig. 1: eine schematische Seitenansicht eines Wurzelkanalinstruments gemäß einer Ausführungsform der Erfindung.

Im Detail zeigt Figur 1 ein gemäß dem erfindungsgemäßen Verfahren zur Herstellung eines Wurzelkanalinstruments hergestelltes Wurzelkanalinstrument 1 mit einem Schaft 2 sowie einen mit dem Schaft 2 durch einen Verbindungsbereich 3 verbundenen Arbeitsbereich 4. An einem distalen Ende des Schafts 2 befindet sich ein Anschlussstück 5. Das Anschlussstück 5 dient dabei zur Verbindung mit einem Antrieb oder auch einem Handstück, mit welchem ein Zahnarzt das Wurzelkanalinstrument 1 bedienen kann.

Der Arbeitsbereich 4 ist als Schneidebereich anzusehen, mit dem abgestorbenes oder bakteriell infiziertes Pulpagewebe eines Wurzelkanals entfernt werden kann. Der Arbeitsbereich 4 weist ein erstes Ende 6 und ein zweites Ende 7 auf. Das erste Ende 6 ist im Verbindungsbereich 3 mit dem Schaft 2 verbunden, während das zweite Ende 7 freiliegt und eine Spitze aufweist. Insgesamt ist der Verlauf des Arbeitsbereichs 2 vom ersten Ende 6 zum zweiten Ende 7 mehr oder weniger konisch, wobei der Arbeitsbereich 2 in Axialrichtung X-X mehrere Bereiche umfasst, die mit unterschiedlichen Drallwinkeln versehen sind, wobei die Drallwinkel vom ersten Ende 6 zum zweiten Ende 7 hin abnehmen.

Der Arbeitsbereich 4 besteht aus einer Nickel-Titan-Legierung, die insbesondere aus 54 bis 57 Masse% Nickel, maximal 0,05 Masse% Kohlenstoff, maximal 0,05 Masse% Sauerstoff und Titan als Rest besteht. Der Arbeitsbereich 4 wurde durch Ablängen eines Stranges aus der Nickel-Titan-Legierung auf ein Rohlingmaß des Arbeitsbereichs, Formen einer Spitze im Arbeitsbereich, Wärmebehandeln des Arbeitsbereichs bei einer Temperatur von 400 bis 430 °C für 25 bis 40 Minuten und insbesondere bei 400 °C für 30 Minuten, Quenchen des wärmebehandelten Arbeitsbereichs auf Raumtemperatur und Herstellen der Endgeometrie des Arbeitsbereichs erhalten. Hierbei waren das Wärmebehandeln, das beispielhaft in einem Ofen ausgeführt wurde, und das anschließende Quenchen, das unter Verwendung von auf Raumtemperatur (20 bis 25 °C) gehaltenem Wasser ausgeführt wurde, essentiell für die Erlangung eines hochflexiblen aber mechanisch stabilen Arbeitsbereichs, der nach Herstellung der Endgeometrie mit dem Schaft 2 verbunden wurde.

Alternativ zu einer Wärmebehandlung in einem Ofen kann die erforderliche Wärme auch über ein "Resistivverfahren" eingebracht werden. Hierbei erfolgt ein Anlegen einer Spannung an das zu erwärmende Bauteil, wobei sich der Stromfluss auf ca. 5A pro Bauteil regelt. Die Kontaktierung des Bauteils mit der Spannungsquelle kann über einen mechanischen Schleifkontakt oder alternativ über einen leitfähigen Elektrolyt erfolgen.

### Bezugszeichenliste

- 1: Wurzelkanalinstrument
- 2: Schaft
- 3: Verbindungsbereich
- 4: Arbeitsbereich
- 5: Anschlussstück
- 6: erstes Ende
- 7: zweites Ende

## Patentansprüche

1. Verfahren zur Herstellung eines Arbeitsbereichs (4) für ein Wurzelkanalinstrument (1) umfassend die Schritte:
- Bereitstellen eines Stranges aus einer Nickel-Titan-Legierung,
- Ablängen des Stranges auf ein Rohlingmaß des Arbeitsbereichs (4),
- Formen einer Spitze im Arbeitsbereich (4),
- Wärmebehandeln des Arbeitsbereichs (4) bei einer Temperatur von 400 bis 430 °C für 25 bis 40 Minuten,
- Quenchen des wärmebehandelten Arbeitsbereichs (4) auf Raumtemperatur und
- Herstellen der Endgeometrie des Arbeitsbereichs (4),
wobei die Nickel-Titan-Legierung als Metallkomponenten ausschließlich Nickel und Titan enthält.

2. Verfahren nach Anspruch 1, wobei das Wärmebehandeln durch Anwendung eines Resistivverfahrens erfolgt.

3. Verfahren nach Anspruch 1 oder 2, wobei die Nickel-Titan-Legierung als weitere Komponenten Kohlenstoff und/oder Sauerstoff umfasst.

4. Verfahren nach einem der vorhergehenden Ansprüche, wobei die Nickel-Titan-Legierung aus 54 bis 57 Masse% Nickel, maximal 0,05 Masse% Kohlenstoff, maximal 0,05 Masse% Sauerstoff und Titan als Rest besteht.

5. Verfahren nach einem der vorhergehenden Ansprüche, ferner umfassend einen Schritt des Verrundens des Arbeitsbereichs (4) nach dem Formen der Spitze und vor dem Wärmebehandeln.

6. Verfahren nach einem der vorhergehenden Ansprüche, wobei das Quenchen in Wasser ausgeführt wird.

7. Verfahren nach einem der vorhergehenden Ansprüche, wobei das Herstellen der Endgeometrie des Arbeitsbereichs (4) ein Schleifen einer Verzahnung und/oder einer Tiefenmarkierung umfasst.

8. Verfahren nach Anspruch 7, wobei die Tiefenmarkierung in einen durch das Wärmebehandeln und Quenchen farblich verfärbten Bereich geschliffen wird.

9. Verfahren zur Herstellung eines Wurzelkanalinstruments (1), umfassend die Schritte:
- Herstellen eines Arbeitsbereichs (4) für das Wurzelkanalinstrument (1) gemäß dem Verfahren nach einem der vorhergehenden Ansprüche und
- Verbinden des Arbeitsbereichs (4) mit einem Schaft (2).

10. Verfahren nach Anspruch 9, wobei das Verbinden des Arbeitsbereichs (4) mit dem Schaft (2) durch Verpressen, Schweißen oder Anspritzen ausgeführt wird.

11. Verfahren nach Anspruch 9 oder 10, ferner umfassend einen Schritt der Farbmarkierung und/oder einen Schritt der Montage eines Stoppers.

12. Wurzelkanalinstrument (1), hergestellt durch ein Verfahren nach einem der Ansprüche 9 bis 11.

## Claims

1. A method of manufacturing a working area (4) for a root canal instrument (1), comprising the steps:
- providing a strand made of a nickel-titanium alloy,
- cutting the strand to a blank size of the working area (4),
- forming a tip in the working area (4),
- heat-treating the working area (4) at a temperature of 400 to 430° C for 25 to 40 minutes,
- quenching the heat-treated working area (4) to room temperature; and
- producing the final geometry of the working area (4),
wherein the nickel-titanium alloy contains exclusively nickel and titanium as metal components.

2. The method according to claim 1, wherein the heat treatment is carried out by applying a resistive process.

3. The method according to claim 1 or 2, wherein the nickel-titanium alloy comprises carbon and/or oxygen as further components.

4. The method according to any of preceding claims, wherein the nickel-titanium alloy consists of 54 to 57 mass % nickel, a maximum of 0.05 mass % carbon, a maximum of 0.05 mass % oxygen, and titanium as the remainder.

5. The method according to any of preceding claims, further comprising a step of rounding the working area (4) after forming the tip and before heat treating.

6. The method according to any of preceding claims, wherein the quenching is carried out in water.

7. The method according to any of preceding claims, wherein producing the final geometry of the working area (4) comprises grinding a toothing and/or a depth mark.

8. The method according to claim 7, wherein the depth mark is ground into a portion discoloured by the heat-treating and quenching.

9. The method of manufacturing a root canal instrument (1), comprising the steps:
- producing a working area (4) for the root canal instrument (1) according to the method according to any of preceding claims, and
- connecting the working area (4) to a shaft (2).

10. The method according to claim 9, wherein the connection of the working area (4) to the shaft (2) is carried out by pressing, welding or moulding.

11. The method according to claim 9 or 10, further comprising a step of colour marking and/or a step of mounting a stopper.

12. A root canal instrument (1) manufactured by a method according to any of claims 9 to 11.

## Revendications

1. Procédé de production d'une zone de travail (4) pour un instrument pour canal radiculaire (1), comprenant les étapes :
- de mise à disposition d'un brin en alliage nickel-titane,
- de découpage du brin à une longueur de la taille d'une ébauche de la zone de travail (4),
- de formation d'une pointe dans la zone de travail (4),
- de traitement thermique de la zone de travail (4) à une température de 400 à 430 °C pendant 25 à 40 minutes,
- de trempe de la zone de travail (4) traitée thermiquement à température ambiante et
- de production de la géométrie finale de la zone de travail (4),
dans lequel l'alliage nickel-titane ne contient comme composants métalliques que du nickel et du titane.

2. Procédé selon la revendication 1, dans lequel le traitement thermique est effectué par application d'un procédé résistif.

3. Procédé selon la revendication 1 ou 2, dans lequel l'alliage nickel-titane comprend comme composants supplémentaires du carbone et/ou de l'oxygène.

4. Procédé selon l'une quelconque des revendications précédentes, dans lequel l'alliage nickel-titane est constitué de 54 à 57 % en masse de nickel, de maximum 0,05 % en masse de carbone, de maximum 0,05 % en masse d'oxygène et de titane en tant que reste.

5. Procédé selon l'une quelconque des revendications précédentes, comprenant en outre une étape pour arrondir la zone de travail (4) après la formation de la pointe et avant le traitement thermique.

6. Procédé selon l'une quelconque des revendications précédentes, dans lequel la trempe est exécutée dans l'eau.

7. Procédé selon l'une quelconque des revendications précédentes, dans lequel la production de la géométrie finale de la zone de travail (4) comprend un meulage d'une denture et/ou d'un marquage de profondeur.

8. Procédé selon la revendication 7, dans lequel le marquage de profondeur est meulé dans une zone colorée par traitement thermique et trempe.

9. Procédé de production d'un instrument pour canal radiculaire (1), comprenant les étapes :
- de production d'une zone de travail (4) pour l'instrument pour canal radiculaire (1) selon le procédé de l'une quelconque des revendications précédentes et
- de raccordement de la zone de travail (4) à une tige (2).

10. Procédé selon la revendication 9, dans lequel le raccordement de la zone de travail (4) à la tige (2) est exécuté par compression, par soudage ou par injection.

11. Procédé selon la revendication 9 ou 10, comprenant en outre une étape de marquage de couleur et/ou une étape de montage d'une butée.

12. Instrument pour canal radiculaire (1) produit par un procédé selon l'une quelconque des revendications 9 à 11.
